# FASCICULE DE BREVET EUROPEEN

(11) **EP 2 103 857 B1**
(45) Date de publication et mention de la délivrance du brevet: **17.10.2012**
(21) Numéro de dépôt: 09290201.4
(22) Date de dépôt: 18.03.2009
(51) Int. Cl.: F16L 23/028, F16L 23/16, F16L 41/08

(54) **Dispositif de connexion étanche pour circuit de climatisation ou de direction assistée de véhicule automobile**
Dichte Anschlussvorrichtung für Klimatisierungsschaltkreis oder Servoschaltkreis eines Kraftfahrzeugs
Sealed connection device for the air-conditioning or power-steering circuit of an automobile

(30) Priorité: 18.03.2008 FR 0801466
(43) Date de publication de la demande: 23.09.2009
(73) Titulaire: Hutchinson, 75008 Paris (FR)
(72) Inventeur: Houssin, Alexandre, 45210 La Selle sur le Bied (FR)
(74) Mandataire: Bolinches, Michel Jean-Marie

(56) Documents cités:
- EP-A- 0 937 935
- EP-A- 1 445 529
- EP-A- 1 719 945
- DE-U1- 20 220 520
- FR-A- 2 232 722
- FR-A- 2 849 150
- FR-A- 2 902 856
- US-B1- 6 386 593

## Description

La présente invention concerne un dispositif de connexion étanche pour un circuit de climatisation ou de direction assistée de véhicule automobile, et un tel circuit l'incorporant. L'invention s'applique en particulier à un tel circuit de climatisation dans lequel circule du dioxyde de carbone à titre de fluide frigorigène.

D'une manière générale, les circuits de climatisation et de direction assistée pour véhicules automobiles sont pourvus de dispositifs de connexion étanche aux fluides y circulant entre les extrémités en regard de deux tubes de ces circuits qui, dans le cas particulier de circuits de climatisation utilisant le dioxyde de carbone à haute pression, notamment, génèrent des fuites de ce fluide frigorigène devant être typiquement de l'ordre de 0,5 g de CO₂ par an.

On a donc cherché de longue date à améliorer ces dispositifs de connexion en utilisant deux brides de raccordement à ces tubes qui sont assemblées l'une à l'autre par une vis de serrage déportée et qui font communiquer les tubes entre eux par un embout de transfert monté de manière étanche dans ces brides par assemblage de type conique/ sphérique procurant de manière bien connue des cercles de contact étanche. On peut par exemple citer le document DE-U1-202 20 520 pour une description d'un tel dispositif, dans lequel l'embout est en outre monté sur des extrémités tronconiques de ces tubes via des joints d'étanchéité.

Un inconvénient majeur de ces dispositifs de connexion connus réside notamment dans les déplacements angulaires relatifs des deux brides (également appelé « angularité ») sous l'effet de la pression du fluide les traversant, déplacements susceptibles de générer à la longue un défaut d'étanchéité en fonctionnement du dispositif de connexion.

Un autre inconvénient de ces dispositifs connus réside dans l'opération de montage de l'embout pour réaliser l'assemblage des deux brides, qui est relativement malaisée du fait du serrage déporté de celles-ci et implique de ce fait un efforts de montage relativement important.

Un but de la présente invention est de proposer un dispositif de connexion étanche entre deux tubes de transfert d'un fluide d'un circuit de climatisation ou de direction assistée pour véhicule automobile qui remédie à ces inconvénients, ce dispositif comprenant :
- deux brides de raccordement qui sont respectivement destinées à recevoir ces tubes en étant montées en regard l'une de l'autre par l'intermédiaire de deux logements de transfert du fluide formés à travers les brides, et qui sont assemblées l'une à l'autre par un organe de fixation déporté, tel qu'une vis de serrage, traversant deux logements de fixation excentrés de ces brides, et
- des moyens de mise en communication étanche des logements de transfert entre eux par deux cercles de contact formés par assemblage de type conique/ sphérique, ces moyens comprenant un embout rigide de transfert à deux extrémités axiales sensiblement en troncs de sphère conçues pour former ces cercles de contact avec deux surfaces tronconiques formées dans les logements de transfert,

A cet effet, un dispositif de connexion selon l'invention est tel qu'il comprend en outre un moyen de support de l'embout qui est agencé axialement entre ces brides et qui comporte des moyens pour maintenir l'embout en position de montage étanche dans ces logements de transfert en compensant l'effort angulaire généré sur les brides par la pression du fluide y circulant.

Par « brides de raccordement », on entendra d'une manière générale dans la présente description deux blocs allongés présentant une surface latérale s'appuyant sur un contour de forme :
- sensiblement elliptique non circulaire ou bien ovale,
- sensiblement rectangulaire, ou
- d'une cacahuète (« peanut block » en anglais), sensiblement telle que celle illustrée à la figure 2 du document précité DE-U1-202 20 520.

On notera que ce moyen de support qui est intercalé entre les brides de raccordement permet essentiellement, d'une part, de supporter et de protéger l'embout primo vis-à-vis d'agents extérieurs et secundo en facilitant son montage dans les brides et, d'autre part, de contribuer à assurer une étanchéité satisfaisante même sous une pression élevée de fluide (notamment du dioxyde de carbone dans le cas d'un circuit de climatisation), par la compensation du phénomène d'angularité précité qui est obtenue par ces moyens de maintien angulaire de l'embout en position dans les logements correspondants des brides.

Selon une autre caractéristique préférentielle de l'invention, ledit moyen de support s'étend radialement autour de l'embout de transfert en étant localisé axialement entre lesdites deux extrémités de cet embout, ce moyen de support épousant de préférence les contours respectifs desdites brides (i.e. en présentant la même forme allongée que celles des brides, par exemple une forme sensiblement elliptique non circulaire ou ovale, de section sensiblement rectangulaire, ou encore une forme de « bloc cacahuète »).

Selon une autre caractéristique de l'invention, ledit moyen de support présente avantageusement un orifice de montage qui enserre ledit embout et un orifice de fixation traversé par ledit organe de fixation, ces orifices de montage et de fixation étant agencés de manière coplanaire et sensiblement coaxialement auxdits logements de transfert et de fixation, respectivement.

Avantageusement, ledit moyen de support peut être constitué d'un flasque souple présentant, outre lesdits orifices traversants de montage et de fixation, au moins un renflement rigide (par exemple métallique) qui constitue lesdits moyens de maintien angulaire dudit embout et qui fait saillie dans la direction axiale du flasque sur une zone de l'une des ou de chaque face(s) transversale(s) du flasque qui est sensiblement opposée à celle recevant ledit embout, de telle sorte que le ou chaque renflement appuie sur la ou chaque bride en regard à l'état monté du dispositif. Ce(s) renflement(s) procure(nt) ainsi un effet anti-cantilever.

On notera que le ou chaque renflement de maintien selon l'invention est formé sur le moyen de support, indépendamment des brides de raccordement, ce qui permet de simplifier le procédé de formage de ces brides, contrairement au document précité DE-U1-202 20 520 qui enseigne d'utiliser une protubérance formant partie intégrante de l'une des brides et destinée à appuyer sur l'autre bride pour assurer le maintien de celles-ci en fonctionnement, ce qui complique la réalisation de la bride intégrant cette protubérance et pénalise donc son coût de fabrication.

Selon un mode de réalisation préférentiel de l'invention, ledit ou chaque renflement est formé d'un seul tenant avec ledit flasque, lequel est de préférence réalisé en un matériau souple thermoplastique ou élastomère thermoplastique. Le ou chaque renflement peut être alors venu de moulage avec ce flasque ou bien, à titre encore plus préférentiel, être obtenu par surmoulage d'un insert destiné à former ce(s) renflement(s) par le matériau souple du flasque.

En variante, le ou chaque renflement peut être rapporté sur le flasque, étant par exemple dans ce cas fixé sur les bords d'un orifice traversant ou non du flasque.

Avantageusement, selon ce mode préférentiel de réalisation ou cette variante, le ou chaque renflement présente une surface extérieure convexe et/ou une géométrie oblongue dans la direction de la largeur du flasque (i.e. perpendiculairement à sa dimension longitudinale). Encore plus avantageusement, le flasque souple de l'invention incorpore deux renflements qui sont chacun identiques, étant tous deux à la fois convexes et oblongs.

Selon une autre caractéristique de l'invention, ledit moyen de support peut présenter avantageusement en outre au moins un orifice auxiliaire de fixation qui est traversé par une goupille d'aide au positionnement que comprend ce dispositif, laquelle goupille est montée dans deux logements de positionnement respectivement formés dans les brides de manière borgne dans la direction axiale, cette goupille étant conçue pour pré-positionner de manière axialement centrée l'embout avant son montage dans les logements de transfert respectifs des brides.

Selon un premier exemple de l'invention, ladite goupille est insérée radialement entre ledit organe de fixation et ledit embout de transfert.

Selon un second exemple de l'invention, ladite goupille est insérée dans ledit moyen de support de manière adjacente audit embout de transfert et radialement à l'extérieur de ce dernier.

On notera que le positionnement de cette goupille peut avantageusement servir à éviter les erreurs de montage.

Selon une autre caractéristique avantageuse de l'invention, ledit moyen de support et ledit embout admettent tous deux à l'état monté un même plan transversal médian de symétrie, de sorte qu'ils sont aptes à être raccordés auxdites brides indifféremment d'un côté axial ou de l'autre.

Encore plus avantageusement, ledit embout peut présenter une symétrie de révolution incluant une partie axialement centrale sensiblement cylindrique et lesdites deux extrémités axiales sensiblement en troncs de sphères, cet embout étant de préférence réalisé en un matériau métallique ou bien plastique de type thermodurci, ou encore élastomère thermoplastique de type vulcanisat thermoplastique (TPV).

Selon un autre aspect de l'invention, ledit dispositif de connexion incorpore les deux tubes de transfert qui communiquent respectivement avec lesdits logements de transfert desdites brides, l'angle que fait l'axe de l'un et/ou l'autre tube avec l'axe du logement de transfert correspondant pouvant être quelconque et avantageusement de 90° environ, à titre non limitatif. Dans un cas particulier de l'invention, ces deux tubes de transfert peuvent être respectivement montés dans ces logements sensiblement coaxialement à l'axe de l'embout, de part et d'autre et indépendamment de ce dernier.

On notera que ce montage indépendant et séparé des deux tubes à raccorder vis-à-vis de l'embout est plus simple à mettre en oeuvre que le montage de l'embout sur ces tubes via des joints d'étanchéité, qui est enseigné par le document précité DE-U1-202 20 520.

Un circuit de climatisation pour véhicule automobile selon l'invention où est destiné à circuler un fluide frigorigène, tel que du dioxyde de carbone ou un autre fluide frigorigène, tel que le R134a, est tel qu'il comporte au moins un dispositif de connexion étanche à ce fluide tel que défini ci-dessus, ce qui lui permet de présenter un risque minimisé de fuites de ce fluide notamment à haute pression, en comparaison des circuits de climatisation connus où le débit de fuite de fluide frigorigène, tel que du R134a, est généralement de l'ordre de 5 g/an à la connexion.

D'autres caractéristiques, avantages et détails de la présente invention ressortiront à la lecture de la description suivante d'un exemple de réalisation de l'invention, donné à titre illustratif et non limitatif, ladite description étant réalisée en référence avec les dessins joints, parmi lesquels :
la figure 1 est une vue éclatée, à la fois en perspective et en coupe axiale, d'un dispositif de connexion selon un exemple de réalisation de l'invention en relation avec les deux tubes de transfert de fluide à raccorder,
la figure 2 est une vue éclatée en coupe axiale du dispositif de la figure 1 et des tubes qui y sont montés, et
la figure 3 est une vue éclatée, à la fois en perspective et en coupe axiale, d'un autre dispositif de connexion selon l'invention représentant une variante de la figure 1, en relation avec les deux tubes à raccorder.

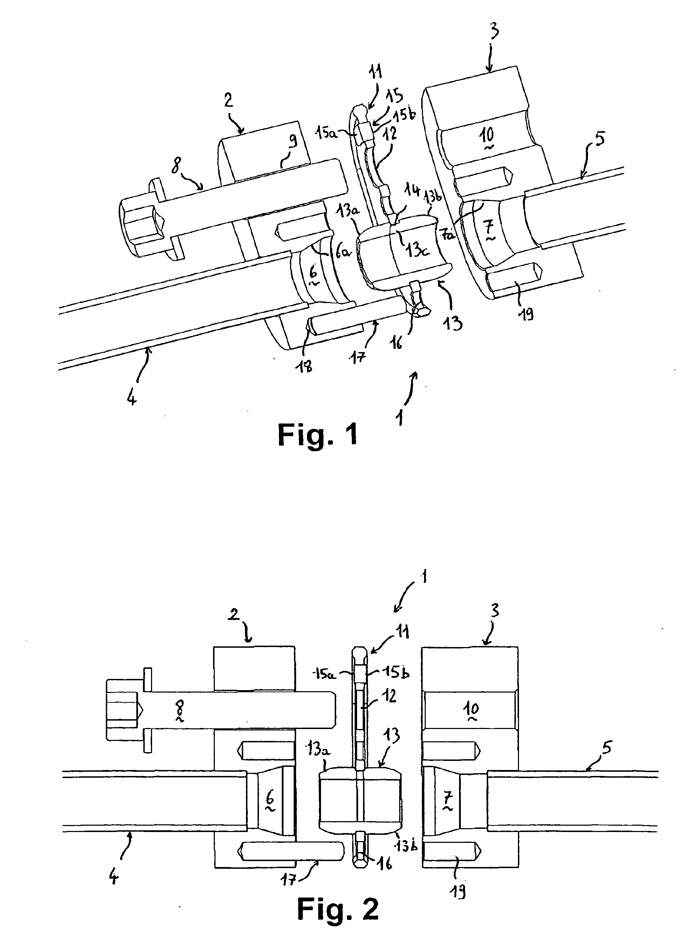

Le dispositif de connexion 1 selon l'invention illustré aux figures 1 et 2 est constitué :
- de deux brides de raccordement 2 et 3 sensiblement ovales qui sont respectivement destinées à recevoir deux tubes 4 et 5 en étant montées en regard l'une de l'autre par l'intermédiaire de deux logements de transfert 6 et 7 du fluide formés à travers les brides 2 et 3, et qui sont assemblées l'une à l'autre par une vis de serrage 8 traversant deux logements de fixation 9 et 10 excentrés de ces brides 2 et 3, et
- d'un flasque souple 11 également ovale qui est intercalé entre ces brides 2 et 3 de sorte à épouser leurs contours respectifs lors du montage déporté de la vis 8 à travers un orifice de fixation 12 du flasque 11 destiné à faire face aux logements de fixation 9 et 10 et qui supporte un embout rigide de transfert 13 inséré dans un orifice de montage 14 du flasque 11 destiné à se trouver en regard des logements de transfert 6 et 7 pour mettre en communication étanche les brides 2 et 3 entre elles.

Cette mise en communication étanche est réalisée de manière connue par deux cercles d'étanchéité formés par assemblage de type conique/ sphérique réalisé entre, d'une part, une portion tronconique 6a, 7a de la surface interne de chaque logement de transfert 6, 7 et, d'autre part, la surface externe sensiblement en tronc de sphère de chacune des deux extrémités axiales 13a et 13b de l'embout 13, lequel présente dans cet exemple de réalisation une symétrie de révolution incluant une partie axialement centrale 13c sensiblement cylindrique.

On notera toutefois que l'embout 13 équipant le flasque 11 selon l'invention pourrait présenter une partie centrale 13c de géométrie toute autre, par exemple à face externe convexe, les seules parties fonctionnelles nécessaires de l'embout 13 étant celles d'extrémité en tronc de sphère 13a et 13b. Comme visible aux figures 1 et 2, l'embout 13 et le flasque 11 le supportant admettent tous deux un même plan transversal médian de symétrie, ce qui les rend avantageusement aptes à être raccordés aux brides 2 et 3 indifféremment d'un côté ou de l'autre.

Le flasque souple 11 est de préférence réalisé en un matériau themroplastique ou élastomère thermoplastique, alors que l'embout rigide 13 est de préférence réalisé en un matériau métallique ou bien en une matière plastique thermodurcie.

Selon une caractéristique importante de l'invention, le flasque souple 11 incorpore en outre des moyens 15 pour maintenir l'embout 13 en position de montage étanche dans les logements de transfert 6 et 7 en appuyant sur les deux brides 2 et 3 en regard, de sorte à compenser en fonctionnement l'effort angulaire sur les brides 2 et 3 généré par la pression du fluide y circulant. Dans l'exemple des figures 1 et 2, ces moyens de maintien sont constitués d'un insert rigide 15 (par exemple métallique) formé d'un seul tenant avec le flasque 11 et formant deux renflements 15a et 15b sur les deux faces transversales respectives du flasque 11, renflements 15a et 15b qui sont de préférence convexes dans la direction axiale et oblongs suivant la largeur du flasque 11. Plus précisément, cet insert 15 est formé en une zone du flasque 11 qui est sensiblement opposée à celle recevant l'embout 13, et il est de préférence intégré au flasque 11 via un surmoulage de cet insert rigide 15 par le matériau souple destiné à constituer ce flasque 11. On notera que l'insert 15 pourrait ne comporter en variante qu'un unique renflement 15a ou 15b faisant saillie en une seule face transversale du flasque 11.

Comme illustré aux figures 1 et 2, le flasque 11 présente en outre au moins un orifice auxiliaire de fixation 16 traversé par une goupille 17 d'aide au positionnement, qui est destinée à être insérée dans deux logements axiaux borgnes 18 et 19 respectivement formés dans les brides 2 et 3 et qui est conçue pour pré-positionner de manière axialement centrée l'embout 13 avant son montage dans les logements de transfert 6 et 7 des brides 2 et 3. Plus précisément, cette goupille 17 est dans cet exemple de réalisation insérée de manière adjacente à l'embout 13 et radialement à l'extérieur de ce dernier (i.e. tout à l'opposé de l'insert 15).

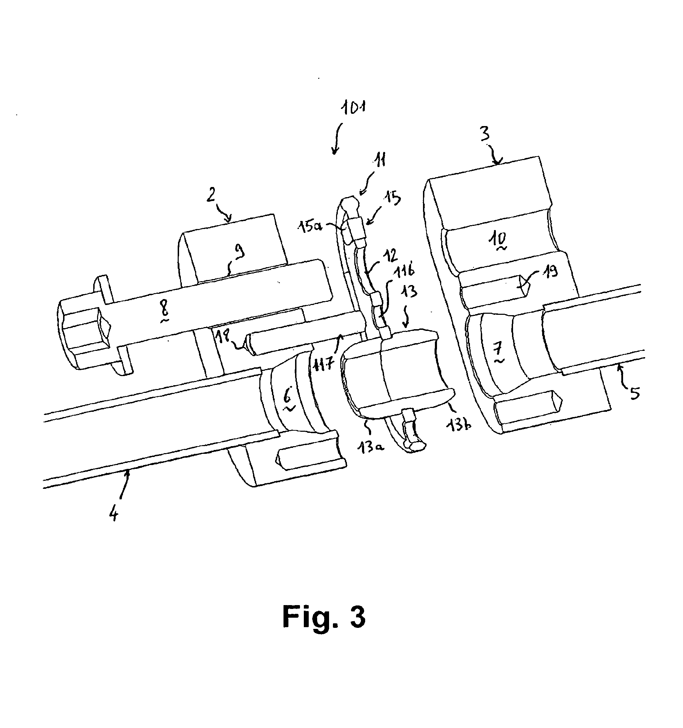

Le dispositif de connexion 101 illustré à la figure 3 se différencie uniquement de celui qui vient d'être décrit en référence aux figures 1 et 2, en ce que la goupille 117 est ici insérée dans un orifice 116 du flasque 11 radialement entre la vis de serrage 8 et l'embout 13.

Comme exposé précédemment, il convient de noter que le dispositif de connexion 1, 101 selon l'invention permet notamment de supporter et de protéger l'embout 13 en facilitant son montage (avec un effort réduit) dans les brides 2 et 3, et d'assurer une étanchéité pérenne, par la compensation du phénomène d'angularité des brides 2 et 3 entre elles qui est obtenue par l'agencement de l'insert de maintien 15 en relation avec l'embout 13.

## Revendications

1. Dispositif de connexion étanche (1, 101) entre deux tubes (4 et 5) de transfert d'un fluide d'un circuit de climatisation ou de direction assistée pour véhicule automobile, le dispositif comprenant :
- deux brides de raccordement (2 et 3) qui sont respectivement destinées à recevoir ces tubes en étant montées en regard l'une de l'autre par l'intermédiaire de deux logements de transfert (6 et 7) du fluide formés à travers les brides, et qui sont assemblées l'une à l'autre par un organe de fixation (8) déporté, tel qu'une vis de serrage, traversant deux logements de fixation (9 et 10) excentrés de ces brides, et
- des moyens de mise en communication étanche (13) des logements de transfert entre eux par assemblage de type conique/ sphérique, ces moyens comprenant un embout rigide de transfert (13) à deux extrémités axiales (13a et 13b) sensiblement en troncs de sphère coopérant avec deux surfaces tronconiques (6a et 7a) formées dans ces logements de transfert,
**caractérisé en ce que** ce dispositif comprend en outre un moyen de support (11) dudit embout qui est agencé axialement entre lesdites brides et qui comporte des moyens (15) pour maintenir l'embout en position de montage étanche dans lesdits logements de transfert en compensant l'effort angulaire sur les brides généré par la pression du fluide y circulant.

2. Dispositif (1, 101) selon la revendication 1, **caractérisé en ce que** ledit moyen de support (11) s'étend radialement autour dudit embout de transfert (13) en étant localisé axialement entre lesdites deux extrémités (13a et 13b) de cet embout, ce moyen de support épousant de préférence les contours respectifs desdites brides (2 et 3).

3. Dispositif (1, 101) selon la revendication 2, **caractérisé en ce que** ledit moyen de support (11) présente un orifice de montage (14) qui enserre ledit embout (13) et un orifice de fixation (12) traversé par ledit organe de fixation (8), ces orifices de montage et de fixation étant agencés de manière coplanaire et sensiblement coaxialement auxdits logements de transfert (6 et 7) et de fixation (9 et 10), respectivement.

4. Dispositif (1, 101) selon la revendication 3, **caractérisé en ce que** ledit moyen de support (11) est constitué d'un flasque souple présentant, outre lesdits orifices traversants de montage (14) et de fixation (12), au moins un renflement rigide (15a, 15b) qui constitue lesdits moyens de maintien (15) dudit embout (13) et qui est formé en saillie dans la direction axiale du flasque (11) sur une zone de l'une des ou de chaque face(s) transversale(s) du flasque qui est sensiblement opposée à celle recevant ledit embout, de telle sorte que le ou chaque renflement appuie sur la ou chaque bride (2, 3) en regard.

5. Dispositif (1, 101) selon la revendication 4, **caractérisé en ce que** ledit ou chaque renflement (15a, 15b) est formé d'un seul tenant avec ledit flasque (11), lequel est de préférence réalisé en un matériau souple thermoplastique ou élastomère thermoplastique.

6. Dispositif (1, 101) selon la revendication 5, **caractérisé en ce que** ledit ou chaque renflement (15a, 15b) est venu de moulage avec ledit flasque (11).

7. Dispositif (1, 101) selon la revendication 5, **caractérisé en ce que** ledit ou chaque renflement (15a, 15b) est obtenu au moyen d'un surmoulage d'un insert (15) destiné à former ce(s) renflement(s) par le matériau souple dudit flasque (11).

8. Dispositif (1, 101) selon une des revendications 4 à 7, **caractérisé en ce que** ledit ou chaque renflement (15a, 15b) présente une surface extérieure convexe et/ou une géométrie oblongue dans la direction de la largeur du flasque (11).

9. Dispositif (1, 101) selon une des revendications précédentes, **caractérisé en ce que** ledit moyen de support (11) présente en outre au moins un orifice auxiliaire de fixation (16, 116) qui est traversé par une goupille d'aide au positionnement (17, 117) que comprend ce dispositif, laquelle goupille est montée dans deux logements de positionnement (18 et 19) respectivement formés dans lesdites brides (2 et 3) de manière borgne dans la direction axiale, cette goupille étant conçue pour pré-positionner de manière axialement centrée ledit embout (13) avant son montage dans les logements de transfert (6 et 7) respectifs desdites brides.

10. Dispositif (101) selon la revendication 9, **caractérisé en ce que** ladite goupille (117) est insérée dans ledit moyen de support (11) radialement entre ledit organe de fixation (8) et ledit embout de transfert (13).

11. Dispositif (1) selon la revendication 9, **caractérisé en ce que** ladite goupille (17) est insérée dans ledit moyen de support (11) de manière adjacente audit embout de transfert (13) et radialement à l'extérieur de ce dernier.

12. Dispositif (1, 101) selon une des revendications précédentes, **caractérisé en ce que** ledit moyen de support (11) et ledit embout de transfert (13) admettent tous deux à l'état monté un même plan transversal médian de symétrie, de sorte qu'ils sont aptes à être raccordés auxdites brides (2 et 3) indifféremment d'un côté axial ou de l'autre.

13. Dispositif (1, 101) selon une des revendications précédentes, **caractérisé en ce que** ledit embout (13) présente une symétrie de révolution incluant une partie axialement centrale (13c) sensiblement cylindrique et lesdites deux extrémités axiales (13a et 13b) sensiblement en troncs de sphères, cet embout étant de préférence réalisé en un matériau métallique ou bien plastique de type thermodurci, ou encore élastomère thermoplastique de type vulcanisat thermoplastique (TPV).

14. Dispositif (1, 101) selon une des revendications précédentes, **caractérisé en ce qu'**il incorpore lesdits deux tubes de transfert (4 et 5) qui sont respectivement montés dans lesdits logements de transfert (6 et 7) desdites brides (2 et 3), sensiblement coaxialement, de part et d'autre et indépendamment dudit embout (13).

15. Dispositif selon une des revendications 1 à 13, **caractérisé en ce qu'**il incorpore lesdits deux tubes de transfert (4 et 5) qui communiquent respectivement avec lesdits logements de transfert (6 et 7) desdites brides (2 et 3), l'angle que fait l'axe de l'un et/ou l'autre tube avec l'axe du logement de transfert correspondant étant sensiblement de 90°.

16. Circuit de climatisation pour véhicule automobile où est destiné à circuler un fluide frigorigène, tel que du dioxyde de carbone, **caractérisé en ce qu'**il comporte au moins un dispositif de connexion étanche (1, 101) à ce fluide selon une des revendications précédentes.

## Claims

1. Fluid-tight connecting device (1, 101) between two tubes (4 and 5) for transferring a fluid from an air conditioning or power-assisted steering circuit for motor vehicles, the device comprising:
- two connection flanges (2 and 3) which are intended to receive these respective tubes by being mounted opposite each other by means of two fluid transfer housings (6 and 7) formed through the flanges, and which are assembled to each other by an offset fixing member (8), such as a clamping screw, traversing two eccentric fixing housings (9 and 10) of said flanges, and
- means (13) for establishing fluid-tight communication between the transfer housings by a conical/spherical type assembly, said means comprising a rigid transfer ferrule (13) that has two axial ends (13a and 13b) of substantially truncated sphere shape cooperating with two frustoconical surfaces (6a and 7a) formed in said transfer housings,
**characterized in that** said device further comprises support means (11) for said ferrule which are arranged axially between said flanges and which comprise means (15) for holding the ferrule in a fluid-tight mounting position in said transfer housings compensating the angular force on the flanges generated by the pressure of the fluid flowing therein.

2. Device (1, 101) according to claim 1, **characterized in that** said support means (11) extend radially around said transfer ferrule (13) by being located axially between said two ends (13a and 13b) of said ferrule, said support means preferably espousing the respective contours of said flanges (2 and 3).

3. Device (1, 101) according to claim 2, **characterized in that** said support means (11) include a mounting orifice (14) which encloses said ferrule (13) and a fixing orifice (12) traversed by said fixing member (8), said mounting and fixing orifices being coplanar and substantially coaxial with said transfer housings (6 and 7) and fixing housings (9 and 10), respectively.

4. Device {1, 101) according to claim 3, **characterized in that** said support means (11) consist of a flexible flange including, in addition to said mounting orifices (14) and fixing orifices (12), at least one rigid bulge (15a, 15b) which constitutes said means (15) for holding said ferrule (13) and which is formed so it projects in the axial direction of the flexible flange (11) over an area of one of the transverse faces or each transverse face of the flexible flange which is substantially opposite that receiving said ferrule, so that the or each bulge bears on the or each facing flange (2, 3).

5. Device {1, 101) according to claim 4, **characterized in that** said or each bulge (15a, 15b) is formed integrally with said flexible flange (11), which is preferably made of a flexible thermoplastic material or thermoplastic elastomer material.

6. Device (1, 101) according to claim 5, **characterized in that** said or each bulge (15a, 15b) is integrally molded with said flexible flange (11).

7. Device (1, 101) according to claim 5, **characterized in that** said or each bulge (15a, 15b) is obtained by overmoulding an insert (15) designed to form the bulge(s) with the flexible material of said flexible flange (11).

8. Device (1, 101) according to any one of claims 4 to 7, **characterized in that** said or each bulge (15a, 15b) has a convex outer surface and/or an oblong geometry in the direction of the width of the flexible flange (11).

9. Device (1, 101) according to any one of the preceding claims, **characterized in that** said support means (11) further include at least one auxiliary fixing orifice (16, 116) which is traversed by a locating pin (17, 117) that this device comprises, which pin is mounted in two positioning housings (18 and 19) formed in said respective flanges (2 and 3) in a blind manner in the axial direction, said pin being adapted to pre-position said ferrule (13) so it is axially centered before the ferrule being mounted in the respective transfer housings (6 and 7) of said flanges.

10. Device (101) according to claim 9, **characterized in that** said pin (117) is inserted in said support means (11) radially between said fixing member (8) and said transfer ferrule (13).

11. Device (1) according to claim 9, **characterized in that** said pin (17) is inserted in said support means (11) adjacent and radially outside said transfer ferrule (13).

12. Device (1, 101) according to any one of the preceding claims, **characterized in that** said support means (11) and said transfer ferrule (13) both have in the assembled state the same median transverse plane of symmetry, so that they are able to be connected to said flanges (2 and 3) on either axial side.

13. Device (1, 101) according to any one of the preceding claims, **characterized in that** said ferrule (13) has symmetry of revolution including a substantially cylindrical axially central portion (13c) and said two axial ends (13a and 13b) of substantially truncated spheres shape, said ferrule preferably being made of metal or a plastic material of thermoset type, or else a thermoplastic elastomer material of thermoplastic vulcanizate (TPV) type.

14. Device (1, 101) according to any one of the preceding claims, **characterized in that** it incorporates said two transfer tubes (4 and 5) which are respectively mounted substantially coaxially in said transfer housings (6 and 7) of said flanges (2 and 3) on either side of and independently of said ferrule (13).

15. Device (1, 101) according to any one of claims 1 to 13, **characterized in that** it incorporates said two transfer tubes (4 and 5) which respectively communicate with said transfer housings (6 and 7) of said flanges (2 and 3), the angle between the axis of one tube and/or the other tube and the axis of the corresponding transfer housing being substantially 90 degrees.

16. Air conditioning circuit for motor vehicles in which a coolant fluid, such as carbon dioxide, is intended to flow, **characterized in that** it includes at least one fluid-tight connection device (1, 101) according to any one of the preceding claims that is fluid-tight for said fluid.

## Patentansprüche

1. Vorrichtung (1, 101) für den dichten Anschluss zwischen zwei Fluidtransportrohren (4 und 5) eines Klimatisierungs- oder Servolenkungskreislaufs für ein Kraftfahrzeug, wobei die Vorrichtung Folgendes aufweist:
- zwei Verbindungsbügel (2 und 3), die jeweils zur Aufnahme dieser Rohre vorgesehen sind, wobei sie über zwei durch die Bügel ausgebildete Fluidtransportaufnahmen (6 und 7) einander gegenüber angebracht sind, und die über ein verschobenes Befestigungsorgan (8), wie etwa eine Klemmschraube, die zwei exzentrische Befestigungsaufnahmen (9 und 10) dieser Bügel durchquert, aneinandergefügt sind, und
- Mittel (13), um die Transportaufnahmen durch konisches/sphärisches Zusammenfügen in dichter Weise miteinander zu verbinden, wobei diese Mittel ein starres Transportansatzstück (13) mit zwei axialen Enden (13a und 13b) im Wesentlichen in Form abgestumpfter Kugeln umfassen, die mit zwei kegelstumpfartigen Flächen (6a und 7a) zusammenwirken, die in diesen Transportaufnahmen ausgebildet sind,
**dadurch gekennzeichnet, dass** diese Vorrichtung ferner ein Mittel (11) zum Stützen des Ansatzstücks aufweist, das axial zwischen den Bügeln angeordnet ist und Mittel (15) aufweist, um das Ansatzstück in einer dichten Montageposition in den Transportaufnahmen zu halten und dabei die Winkelkraft auf die Bügel, die durch den Druck des darin zirkulierenden Fluids erzeugt wird, zu kompensieren.

2. Vorrichtung (1, 101) nach Anspruch 1, **dadurch gekennzeichnet, dass** sich das Stützmittel (11) radial um das Transportansatzstück (13) erstreckt und dabei axial zwischen den beiden Enden (13a und 13b) dieses Ansatzstücks angeordnet ist, wobei dieses Stützmittel sich vorzugsweise an die jeweiligen Konturen der Bügel (2 und 3) anschmiegt.

3. Vorrichtung (1, 101) nach Anspruch 2, **dadurch gekennzeichnet, dass** das Stützmittel (11) eine Montageöffnung (14), die das Ansatzstück (13) umschließt, und eine Befestigungsöffnung (12) aufweist, durch die sich das Befestigungsorgan (8) erstreckt, wobei diese Montage- und Befestigungsöffnung koplanar und im Wesentlichen koaxial zu den Transportaufnahmen (6 und 7) bzw. Befestigungsaufnahmen (9 und 10) angeordnet sind.

4. Vorrichtung (1, 101) nach Anspruch 3, **dadurch gekennzeichnet, dass** das Stützmittel (11) aus einer nachgiebigen Scheibe besteht, die neben der Montage- (14) und Befestigungsdurchgangsöffnung (12) mindestens eine starre Verdickung (15a, 15b) aufweist, welche die Mittel (15) zum Halten des Ansatzstücks (13) bildet und in axialer Richtung der Scheibe (11) auf einen Bereich einer oder jeder Querfläche der Scheibe hervorstehend ausgebildet ist, die im Wesentlichen zu derjenigen entgegengesetzt ist, die das Ansatzstück aufnimmt, so dass die oder jede Verdickung auf den oder jeden gegenüberliegenden Bügel (2, 3) drückt.

5. Vorrichtung (1, 101) nach Anspruch 4, **dadurch gekennzeichnet, dass** die oder jede Verdickung (15a, 15b) einstückig mit der Scheibe (11) ausgebildet ist, die vorzugsweise aus einem nachgiebigen thermoplastischen Material oder einem thermoplastischen Elastomermaterial hergestellt ist.

6. Vorrichtung (1, 101) nach Anspruch 5, **dadurch gekennzeichnet, dass** die oder jede Verdickung (15a, 15b) mit der Scheibe (11) aus einem Stück geformt ist.

7. Vorrichtung (1, 101) nach Anspruch 5, **dadurch gekennzeichnet, dass** die oder jede Verdickung (15a, 15b) durch Aufformen eines Einsatzes (15) erhalten wird, der dazu vorgesehen ist, mit dem nachgiebigen Material der Scheibe (11) diese Verdickung(en) zu bilden.

8. Vorrichtung (1, 101) nach einem der Ansprüche 4 bis 7, **dadurch gekennzeichnet, dass** die oder jede Verdickung (15a, 15b) eine konvexe Außenfläche und/oder eine in Richtung der Breite der Scheibe (11) langgestreckte Geometrie aufweist.

9. Vorrichtung (1, 101) nach einem der vorhergehenden Ansprüche, **dadurch gekennzeichnet, dass** das Stützmittel (11) ferner mindestens eine Befestigungszusatzöffnung (16, 116) aufweist, durch die sich ein Positionierungshilfsstift (17, 117), den diese Vorrichtung aufweist, erstreckt, wobei der Stift in zwei Positionierungsaufnahmen (18 und 19) angebracht ist, die jeweils in axialer Richtung blind in den Bügeln (2 und 3) ausgebildet sind, wobei dieser Stift zur axial zentrierten Vorpositionierung des Ansatzstücks (13) vor seiner Montage in den jeweiligen Transportaufnahmen (6 und 7) der Bügel ausgelegt ist.

10. Vorrichtung (101) nach Anspruch 9, **dadurch gekennzeichnet, dass** der Stift (117) radial zwischen dem Befestigungsorgan (8) und dem Transportansatzstück (13) in das Stützmittel (11) eingesetzt ist.

11. Vorrichtung (1) nach Anspruch 9, **dadurch gekennzeichnet, dass** der Stift (17) angrenzend an das Transportansatzstück (13) und radial außerhalb von diesem in das Stützmittel (11) eingesetzt ist.

12. Vorrichtung (1, 101) nach einem der vorhergehenden Ansprüche, **dadurch gekennzeichnet, dass** das Stützmittel (11) und das Transportansatzstück (13) im montierten Zustand beide ein und dieselbe querverlaufende Symmetriemittelebene annehmen, so dass sie in gleicher Weise auf der einen oder auf der anderen axialen Seite mit den Bügeln (2 und 3) verbunden sein können.

13. Vorrichtung (1, 101) nach einem der vorhergehenden Ansprüche, **dadurch gekennzeichnet, dass** das Ansatzstück (13) eine Rotationssymmetrie aufweist, die einen axial mittigen, im Wesentlichen zylindrischen Abschnitt (13c) und die beiden axialen Enden (13a, 13b) im Wesentlichen in Form abgestumpfter Kugeln umfasst, wobei dieses Ansatzstück vorzugsweise aus einem metallischen Material oder aus einem in Wärme ausgehärteten Kunststoffmaterial oder auch aus einem thermoplastischen Elastomermaterial der Art thermoplastisches Vulkanisat (TPV) hergestellt ist.

14. Vorrichtung (1, 101) nach einem der vorhergehenden Ansprüche, **dadurch gekennzeichnet, dass** sie die beiden Transportrohre (4 und 5) aufnimmt, die jeweils in den Transportaufnahmen (6 und 7) der Bügel (2 und 3) im Wesentlichen koaxial auf der einen und auf der anderen Seite des Ansatzstücks (13) und unabhängig davon angebracht sind.

15. Vorrichtung nach einem der Ansprüche 1 bis 13, **dadurch gekennzeichnet, dass** sie die beiden Transportrohre (4 und 5) aufnimmt, die jeweils mit den Transportaufnahmen (6 und 7) der Bügel (2 und 3) verbunden sind, wobei der Winkel, den die Achse des einen und/oder des anderen Rohrs mit der Achse der Transportaufnahme bildet, im Wesentlichen 90° beträgt.

16. Klimatisierungskreislauf für ein Kraftfahrzeug, in dem ein Kältefluid, wie etwa Kohlenstoffdioxid zirkulieren soll, **dadurch gekennzeichnet, dass** er mindestens eine gegenüber diesem Fluid dichte Anschlussvorrichtung (1, 101) nach einem der vorhergehenden Ansprüche aufweist.
